# EUROPEAN PATENT SPECIFICATION

(11) **EP 2 348 929 B1**
(45) Date of publication and mention of the grant of the patent: **26.11.2014**
(21) Application number: 09736632.2
(22) Date of filing: 07.10.2009
(51) Int. Cl.: A47J 31/053

(54) **ELECTRIC INFUSION BEVERAGE MAKERS**
ELEKTRISCHE AUFGUSSGETRÄNKEZUBEREITUNGSMASCHINEN
DISPOSITIF DE FABRICATION DE BOISSON PAR INFUSION ÉLECTRIQUE

(30) Priority: 07.10.2008 GB 0818364; 20.05.2009 GB 0908682
(43) Date of publication of application: 03.08.2011
(73) Proprietor: STRIX LIMITED, Ronaldsway Isle of Man IM9 2RG (GB)
(72) Inventor: GARVEY, Vincent, Joseph, Isle of Man IM9 4BF (GB)
(74) Representative: Ramsay, Laura Anne
(86) International application number: PCT/GB2009/002390
(87) International publication number: WO 2010/041003

(56) References cited:
- US-A- 1 472 901
- US-A- 2 768 573
- US-A- 3 011 428
- US-A- 3 469 522
- US-A1- 2002 164 410

## Description

The present invention relates to electric infusion beverage makers, and in particular, but not exclusively, to electric tea makers.

A traditional method for making tea is to place tea leaves or tea bags into a teapot, boil water in a separate chamber such as a kettle, and then pour the boiled water over the tea in the pot. The tea beverage is left to infuse for a certain amount of time before it is poured out of the pot, possibly through a strainer if loose tea leaves have been used. The infusion process can be speeded up by stirring the beverage, but this requires manual intervention.

Many different electric tea and coffee makers have been proposed. In some an infusion chamber is mounted on top of an electrically heated water chamber, with a pipe connecting them. As water in the lower chamber is heated to boiling, the pressure build-up forces water up the pipe and into contact with the beverage solids, e.g. coffee grounds, in the infusion chamber. Once heating is disrupted, the lower chamber cools and a partial vacuum is created which causes the infused beverage to be sucked back down the pipe into the lower chamber, from where it can be dispensed. The spent beverage solids are retained by a sieve or other perforated membrane. Such a vacuum coffee maker is disclosed in WO 00/30514. In another proposal for a tea maker described in EP 1238615, a valve is used to release the pressure in the chamber after transfer of heated water to the infusion chamber, thereby allowing the infused beverage to return to the lower chamber by gravity.

One drawback to such vacuum-type appliances is that the infusion chamber needs to have a tightly sealed connection with the water heating chamber in order to allow for the required pressure build-up and safe transfer of the heated water into the upper chamber. Such appliances can be relatively complicated and expensive to manufacture. Typically a thermally responsive control means is arranged to detect when a portion of the base of the heating chamber has boiled dry, which indicates that a predetermined amount of water has been transferred into the infusion chamber, and to interrupt or reduce heating so as to stop boiling and allow the pressure to drop. Using such an arrangement it can be difficult to adjust the infusion time. It takes a certain period of time for water from the lower chamber to be transferred up to the infusion chamber and for the pressure to be subsequently released thereby allowing the infused beverage to return back down to the lower chamber. Some beverages may be left to stew for too long while others are not infused for long enough, depending on the type of beverage. Furthermore, such appliances may not be appropriate for all kinds of beverage, for example delicate types of tea leaves requiring a more gentle infusion, as the heated water is forced in a pressurised stream up through the beverage material.

Coffee percolators are known comprising a lower water heating chamber and an upper coffee infusion chamber. As water in the lower chamber is heated to boiling point, the vapour pressure forces water up a tube from the lower chamber to the upper chamber, where it is typically showered over a basket of coffee grounds arranged between the two chambers and filters down through the grounds. US-3011428 provides an example of a coffee maker wherein heated liquid rises under pressure in a tube to contact grounds held in a percolation basket.

In other electric tea or coffee making appliances the beverage is infused in the same chamber which heats the water. For example, US 2007/0278202 describes an electric beverage maker comprising a water heating chamber and an infusion container which is immersible therein. The infusion container, e.g. filled with tea leaves or coffee grounds, is held out of the water until the water reaches an appropriate temperature and is then immersed for a certain period of time to allow infusion to take place. The infused beverage can be poured directly out of the chamber.

Such an appliance may be more suited to making a range of infusion beverages including tea and coffee and may allow a degree of control of the infusion time. However, it can take quite a considerable period of time for the beverage flavour to diffuse out of the infusion chamber and for the whole volume of heated water to become infused. This is compounded by the infusion chamber having relatively small perforations to prevent the escape of beverage solids into the final drink, but which also limit the movement of heated water into contact with the beverage. During this time the water may cool down from its optimum infusion temperature. Due to poor mixing with the heated water, the infused beverage may be left to stew for longer than is desirable and/or the flavour may be impaired.

When viewed from a first aspect the present invention provides an electric infusion beverage maker as defined by claim 1.

Thus in accordance with the invention the outlet from the infusion chamber is arranged such that liquid cannot pass straight through the chamber. Of course if the drainage rate out of the infusion chamber is limited such that it is less than the rate of transfer into the infusion chamber then the chamber will start to fill up with liquid. Unlike a conventional tea strainer, for example, a volume of liquid is held up in the infusion chamber before draining away. This can advantageously increase the amount of beverage flavour which is infused.

It will be understood that when it is said that liquid drains out of the infusion chamber, what is meant is that liquid flows under gravity rather than being forced or pumped. The rate at which a liquid drains is determined by the flow resistance, e.g. size, of the of the drainage outlet means and the pressure head of liquid above the outlet means.

The outlet means is preferably arranged to ensure that a minimum volume of liquid is built up, and preferably maintained, at least for a certain period of time while heated liquid is being transferred into the infusion chamber. This can ensure that the beverage material is thoroughly wetted and stays wetted throughout the infusion process. Where the beverage material includes tea leaves, in particular, it can be advantageous for the leaves to be suspended in a volume of hot liquid for a time so that they are able to unfurl and move around. However it is preferred that once liquid is no longer being transferred, all the liquid left in the infusion chamber is free to gradually drain out.

The outlet means may be arranged to drain beverage-infused liquid out of the infusion chamber only after a certain volume of heated liquid has been transferred into the infusion chamber. However it is preferred that infused beverage is able to drain out of the infusion chamber, at the drainage rate, whenever heated liquid is being transferred into the infusion chamber, at the transfer rate. In other words, the transfer and drainage mechanisms are substantially simultaneous. However the lower drainage rate ensures that water does not drain away until it has been held up in the infusion chamber for a certain amount of time.

Furthermore it will be understood that by using a pump to transfer heated liquid to the infusion chamber the infusion process can be controlled easily and accurately. The pump can be arranged to bring heated liquid into contact with the beverage contained in the infusion chamber at a steady rate rather than, e.g. relying on a pressure build-up to initiate transfer as in known devices. Moreover the transfer rate provided by the pump is preferably predetermined and reliable, so that the appliance can be designed with a set difference between the transfer and drainage rates that will give the desired liquid pooling effect in the infusion chamber. Of course the transfer rate provided by the pump may be set depending on the volume and drainage resistance of the infusion chamber. The invention advantageously combines controlled transfer by the pump from the liquid heating chamber to the infusion chamber with controlled drainage from the infusion chamber back into the liquid heating chamber. Re-circulation of beverage-infused liquid between the two chambers may be provided.

As used herein it should be understood that what is meant by a pump is a mechanical device (i.e. with moving parts) which does work on the liquid, for example to raise it against gravity. The use of thermal energy to create a driving force for the movement of liquid is not to be considered to be a "pump".

In accordance with the invention the pump is arranged to transfer heated liquid from the heating chamber to the infusion chamber where it comes into contact with beverage solids contained therein. This allows the transfer of liquid out of the heating chamber and into the infusion chamber to be controlled more easily and accurately. It means that the whole volume of liquid in the heating chamber can be brought to a desired, controllable temperature before transfer is commenced. The pump can be used to transfer liquid which has been heated to any desired temperature; the transfer does not rely on the water boiling. The quality of the infused beverage is thereby improved for a range of different infusions. Preferably the apparatus comprises means enabling a user to select a temperature for liquid in the liquid heating chamber whereupon the pump comes into operation. Thus a user may choose, for example, an optimal water temperature for a particular type of infusion. Some delicate tea leaves are better infused in liquid at a lower temperature than the boiling liquid which is typically used to make black tea.

In a particularly preferred embodiment the infusion chamber is arranged above the heating chamber so that the pump is used to pump liquid up into the infusion chamber and the beverage can drain directly into the heating chamber under gravity. In such an arrangement the transfer of infused beverage back into the heating chamber can commence as soon as it has been retained for the predetermined period and even concurrently with water in the heating chamber being pumped into the infusion chamber. This is not possible in vacuum-type beverage makers.

A pipe may be connected to the pump to transfer heated liquid to the infusion chamber. Although the pipe may pass through the heating chamber, it is preferred that the pipe is external to the heating chamber. This can make it easier to fill/empty and clean the heating chamber without interference from the presence of the transfer pipe. In a particularly preferred set of embodiments the transfer pipe is housed inside a handle of the appliance. This enables the pipe to be hidden from view and potentially insulated, for example where the handle is formed of plastic.

Preferably the outlet means is independent of the means for transferring liquid into the infusion chamber, i.e. there are separate flow paths into and out of the infusion chamber, so as to allow for a continuous circulation. Thus the path taken by the pumped liquid is preferably arranged to bypass the outlet means of the infusion chamber. This is an improvement over known vacuum-type devices where the heated water is forced up through the beverage solids into the infusion chamber and the beverage returns via the same path. It is also an improvement over immersion-type devices where the heated water has to percolate into an infusion chamber via the perforated outlets.

Many different suitable outlet means may be provided which provide a drainage rate lower than the transfer rate. The first rate of liquid transfer and/or the second rate of liquid drainage may be variable. In some embodiments, the second rate of liquid drainage may be set to zero at least for a period of time. For example, the outlet means may comprise a valve which only operates once a minimum volume of liquid is present in the chamber. The valve may restrict the outflow of liquid in order to maintain the liquid level at or above a minimum for as long as liquid is being transferred into the chamber, and even for a period thereafter if desired. A float valve is one simple possibility. A valve in the bottom of the chamber which is operated by a minimum pressure head of liquid is another possibility. However it is preferred that once such an outlet valve has been activated, it stays open such that all of the liquid in the infusion chamber can gradually drain out and ultimately there is no liquid left in the chamber. In such a release phase, when liquid is no longer being transferred into the infusion chamber, the drainage rate may match or even exceed the rate at which liquid had been transferred into the infusion chamber.

The outlet means could comprise one or more outlets arranged towards or at the top of the infusion chamber. The mixture of heated liquid and beverage material must therefore fill up substantially to the top of the chamber before draining out. However, if the outlets are sized so as to limit the flow out of the infusion chamber then there is a risk of the chamber overflowing. On the other hand, if the outlets are large enough to provide for unrestricted flow then there is a risk of beverage material escaping. As the chamber may be intended to hold a range of different beverage materials, it can be difficult to design such upper outlets to operate effectively for all types of beverage.

Furthermore, a problem with this arrangement is that the beverage-infused liquid in the chamber cannot fully drain out of the upper outlets once liquid is no longer being transferred into the chamber. A further drainage means, such as a secondary outlet, must be provided to empty the infusion chamber. It is envisaged that one or more further outlets, for example sized smaller than the upper outlet(s), may be provided at the bottom of the infusion chamber to allow the final volume of liquid in the chamber to slowly drain away.

However the Applicant has appreciated that it is simpler to provide a single outlet means which is capable of both restricting the flow rate out of the infusion chamber relative to the transfer rate but ultimately allowing the chamber to drain empty. Thus in a preferred embodiment the outlet means comprises one or more outlets arranged at or towards the bottom of the infusion chamber. The outlet(s) provide a drainage rate which is less than the rate of liquid transfer into the infusion chamber. Thus a volume of liquid will build up in the infusion chamber while liquid is being transferred therein. This provides a very simple and cost effective mechanism for holding up liquid in the infusion chamber while it is being transferred, rather than passing straight through.

The retention of liquid in the infusion chamber can be particularly important for tea and other herbal (e.g. leaf or flower) brewing processes. Whereas it is usually considered preferable when making a coffee beverage for the grounds to be compressed and for water to be forced through the grounds on a short time scale, when making tea it is generally preferable for the leaves to have space to move in the heated liquid. Dried leaf teas such as oolong are often rolled and then need to unfurl during infusion. A volume increase of up to 300% is not uncommon. A requirement for good tea making is therefore to ensure adequate liquid volume in the infusion chamber into which the tea leaves can unfurl, expand and circulate freely.

It is therefore preferred that the outlet means is arranged so as to attain, and maintain for at least a period of time while liquid is being transferred into the infusion chamber, a minimum volume of heated liquid in the infusion chamber which is at least 1/4, preferably at least 1/2, and further preferably at least 3/4 of the volume of the infusion chamber.

The infusion chamber preferably has a perforated or mesh interface with the liquid heating chamber which allows infused beverage to drain into the liquid heating chamber. In preferred embodiments, the infusion chamber will generally be designed to be capable of holding a certain amount of beverage solids for infusion, and of allowing liquid to drain into the heating chamber below. The size of the pores in the infusion chamber are therefore chosen so as substantially to prevent the escape of the intended beverage solids such as tea leaves. Where the infusion chamber is formed from a stainless steel mesh it is preferably perforated with holes around 0.75 mm in size, which may be arranged in a grid pattern with a spacing of 1.25 mm between their centres. Where the infusion chamber is formed from moulded plastics, e.g. polycarbonate, it may be perforated with holes of 1 to 1.25 mm in size.

However it has been appreciated that the arrangement of the pores in the infusion chamber can be selected so as to have an additional effect. It is preferred that the number of pores is chosen so as to limit the rate of flow of liquid out of the infusion chamber beyond the limitation in flow rate imposed by the beverage solids. In other words, the flow rate is deliberately restricted. This can advantageously prolong the length of time that heated liquid is in contact with the beverage solids in the infusion chamber.

When the rate of transfer of liquid out of the infusion chamber is limited such that it is less than the rate of transfer into the infusion chamber then the chamber will start to fill up with liquid. As mentioned, this increases the amount of beverage flavour which is infused, but depending on the capacity of the chamber there is a risk of overflowing. To prevent this from happening, the infusion chamber is preferably provided with a larger number of pores at an upper portion thereof which can act as an overflow outlet and allow liquid to flow freely out of the infusion chamber. A similar effect may be achieved by changing the relative size of the pores at the top and bottom of the vessel, although this is limited by the necessity for the pores to still be small enough to filter out any solid particulate material from the infused beverage.

In a preferred embodiment the infusion chamber comprises at a lower end a first outlet means which limits the flow of liquid under gravity into the beverage receiving chamber and at an upper end a second outlet means which allows an unrestricted flow of liquid under gravity out of the infusion chamber. This allows the infusion chamber to fill up with liquid to a certain degree and prolongs the infusion process, whilst also avoiding that the infusion chamber overfills. The second outlet means may be arranged to direct excess liquid away from the beverage receiving chamber, so as not to dilute the infused beverage.

This is an advantageous arrangement in its own right, and can be applied to any infusion beverage maker regardless of whether it heats its own water or the water is heated externally (e.g. in a separate kettle). Thus from a further aspect the invention provides an infusion beverage maker comprising an infusion chamber arranged over a beverage receiving chamber, the infusion chamber containing in use a beverage to be infused, wherein the infusion chamber comprises at a lower end a first outlet means which limits the flow of liquid under gravity into the beverage receiving chamber and at an upper end a second outlet means which allows an unrestricted flow of liquid under gravity out of the infusion chamber.

It will be appreciated that the pooling of liquid in the infusion chamber requires the infusion chamber to be of a certain size. Preferably the infusion chamber is large enough to hold at least 1/8, preferably around 1/6 of the volume of the heating chamber or beverage receiving chamber. The larger the volume of the infusion chamber the better, although in practice its size is limited by the design constraints on the appliance. The volume of the infusion chamber must be at least 10 to 20 % of the volume of the heating chamber in order to contain enough beverage material to infuse the volume of liquid being heated. For example, the heating chamber may have a capacity of up to 1.5 litres corresponding to six cups of beverage and the infusion chamber may have a capacity of 200 - 500 ml corresponding to one to two cups of liquid. For an appliance having a 1 litre capacity corresponding to four cups of liquid, the infusion chamber may have a capacity of at least 150 - 200 ml corresponding to almost one cup of liquid. This means that when the infusion chamber fills up with liquid the solid flavour ingredients (e.g. tea leaves) contained therein are fully immersed and there is plenty of space for the flavour materials to expand and move around.

In preferred embodiments the infusion chamber is arranged over the liquid heating chamber or beverage receiving chamber such that beverage-infused liquid can drain directly, e.g. through one or more outlets, into the chamber below by gravity. This facilitates manufacture and reduces cost. In accordance with the invention the flow of liquid through the beverage solids in the infusion chamber is not forced by a pumping action, as is often the case with coffee makers. Instead it is controlled by the pressure head of liquid in the chamber, and the flow resistance presented by the beverage solids and the outlet means from the chamber. As the liquid heating chamber is preferably not pressurised, the infused beverage can start to flow back down into the heating chamber under gravity even while water in the chamber below is still being transferred, albeit draining at a slower rate than the transfer. Re-circulation of the infused beverage, as will be described below, can be readily achieved with such an arrangement.

This feature is advantageous in its own right, regardless of whether the heated liquid is pumped, and thus there is also disclosed herein an electric infusion beverage maker comprising a liquid heating chamber having electric heating means associated therewith for heating liquid in the chamber, an infusion chamber for receiving in use a beverage to be infused, and means for transferring heated liquid from the liquid heating chamber to the infusion chamber at a first rate, wherein the liquid heating chamber is arranged to receive beverage-infused liquid from the infusion chamber and wherein the infusion chamber has outlet means arranged such that beverage-infused liquid drains out of the infusion chamber at a second rate which is lower than the first rate.

It has been found that when an infused beverage such as tea drains out of the infusion chamber back into the heating chamber or beverage receiving chamber, there can be a tendency for the liquid to bubble and foam. In order for the infused beverage to be transferred smoothly into the heating chamber, the infusion chamber is preferably provided with means for directing a laminar flow of liquid. For example, the infusion chamber may be provided on its underside with a pointed protuberance or string-like member onto which droplets of the infused beverage can collect and coalesce into a laminar flow stream.

It is preferable for the beverage material to be distributed throughout the volume of heated liquid in the infusion chamber. This may be achieved by arranging for agitation of the liquid. The infusion chamber may comprise an inlet means which forms an incoming jet of liquid. The incoming jet may be arranged to impinge on a baffle or wall of the chamber so as to form a spray or other turbulent liquid motion. However, rather than creating turbulent flow, it is preferable for the liquid to circulate inside the infusion chamber. This can be achieved as defined in claim 1 by arranging for heated liquid to be transferred into the infusion chamber in a manner which sets up a cyclonic or swirling flow in the chamber. For example, an incoming jet may be directed along a direction which is tangential to a wall of the chamber.

This is an advantageous arrangement in its own right, and can be applied to any infusion beverage maker regardless of whether it heats its own water or the water is heated externally. Thus there is further disclosed herein an infusion beverage maker comprising an infusion chamber containing in use a beverage to be infused and means to transfer heated liquid into the infusion chamber which is arranged so as to create a circulation of liquid in the chamber.

According to the first aspect of the invention described above, the infusion chamber drains itself via outlet means rather than requiring liquid to be pumped out. However, it is envisaged that the infusion chamber could drain into an intermediate chamber from where the beverage may be pumped out e.g. to provide a beverage on demand or to control the reheating and/or re-circulation of the beverage.

The pump is arranged to transfer liquid one way only, with gravity or hydrostatic pressure being relied on to transfer liquid the other way between the chambers. As already discussed, the use of a pump to transfer heated liquid between the two chambers can provide for an easily controlled transfer of liquid into the infusion chamber.

The pump could be immersed directly in the liquid heating chamber, but preferably it is provided remotely therefrom and preferably connected with a suitable pipe or conduit. This enables ease of maintenance and replacement of the pump. Moreover it reduces the number of components present in the liquid heating chamber and can facilitate cleaning of the chamber. Where, for instance, the walls of the liquid heating chamber allow for viewing of the contents then it may also be aesthetically preferred for the pump to be external to the liquid heating chamber. In some embodiments the liquid heating chamber may comprise transparent walls e.g. of glass or plastic material. For the same reasons it is further preferred that any pipe(s) communicating with the pump is/are also external to the liquid heating chamber. Of course, the pump may be arranged to have an inlet which takes liquid directly from the liquid heating chamber and/or an outlet which transfers liquid directly into the infusion chamber.

It has been found that when the pump is connected to the heating chamber by an inlet pipe then there is a risk of one or more air bubbles becoming trapped in the pipe and forming an airlock which prevents operation of the pump. The presence of air bubbles around an impeller could also prevent the pump from operating properly. One way of flushing air bubbles out of the pump cavity and any pipe or conduit leading thereto is to use a short period of pulsed operation before beginning continuous operation of the pump and transfer of liquid into the infusion chamber. After each pulse of pumping operation, the liquid pushed out of the pump cavity, e.g. up a transfer pipe, will fall back down and push any air bubbles in the cavity and inlet pipe back into the heating chamber.

Although the pulsing technique can go some way towards preventing bubbles from interfering with the pump, there still exists the possibility of small air bubbles in the heated liquid coalescing in the pump inlet pipe into an airlock. For a typical pump rate of 300 to 450 l/hr, the inlet pipe to the pump may have an inner diameter of 8-10 mm. An air bubble could readily form in a pipe of such a size. To overcome this problem, the connection between the inlet pipe from the liquid heating chamber and the pump cavity is preferably baffled so as to achieve a Venturi effect. This means that the liquid speeds up as it passes from the inlet pipe into the pump cavity. Further preferably it is arranged that some of the liquid flowing along the inlet pipe impinges on one or more surfaces of the baffling arrangement. Entrained air bubbles will therefore become trapped behind the baffle. This can be achieved, for example, by increasing the diameter of the inlet pipe relative to an entrance aperture to the pump cavity. Any bubbles that are entrained with the liquid as it flows through the baffling will be rushed through and will not cause a blockage at the inlet to the pump.

The outlet of the pump is preferably arranged to deliver liquid over the beverage solids in the infusion chamber. In a preferred embodiment the outlet of the pump comprises a liquid transfer pipe arranged to deliver liquid into the infusion chamber. Although the transfer pipe may actually enter the infusion chamber or be arranged over the infusion chamber, this is less preferred as it can interfere with removal of the infusion chamber, for example for emptying and re-filling. It is therefore preferred that the transfer pipe is arranged to direct liquid into the infusion chamber without hindering removal of the infusion chamber. This can be achieved by pumping the liquid at a sufficient velocity that it shoots out of the pipe and into the infusion chamber. Moreover the outlet of the pipe is arranged so as to direct liquid into the infusion chamber at a particular angle and/or with a particular velocity. The outlet of the pipe is arranged so as to set up a cyclonic or swirling flow of liquid into the infusion chamber. As is described above, this may improve the infusion process by circulating the beverage solids e.g. tea leaves and ensuring maximum flavour extraction.

In one set of embodiments the outlet of the pump and any liquid transfer pipe associated therewith is/are arranged to distribute water over the beverage solids in the infusion chamber. This could be achieved by directing the liquid through a shower head or sprinkler arrangement. In the case of tea this ensures that all of the tea leaves are wetted and can start to unfurl as soon as liquid starts to be transferred into the infusion chamber. Such a liquid showering arrangement may also provide an aesthetically pleasing effect.

The shower head or other distributor could be attached to the outlet of the transfer pipe, but is likely to need to be moved or removed to gain access to the infusion chamber. In a particularly preferred embodiment it is therefore envisaged that a lid of the appliance provides the desired distribution of liquid over the beverage. The beverage maker preferably comprises a lid fittable over the infusion chamber and the outlet from the pump is preferably arranged to deliver liquid into or onto the lid. For example, the lid could be apertured so as to convert a stream of liquid from the pump into a shower. Preferably the lid forms a liquid receiving chamber for liquid from the pump. The lid may fit over the end of a liquid transfer pipe connected to the pump outlet at its other end.

Using the lid to form a liquid receiving chamber intermediate the liquid heating chamber and pump, and the infusion chamber, can have several advantages. As mentioned above, the liquid chamber in the lid can in some embodiments be arranged to outlet heated liquid into the infusion chamber in a uniformly distributed manner, e.g. like a shower head. Perhaps more importantly, the intermediate chamber of the lid can be used to slow down the pumped liquid if a high velocity stream is not desired and/or re-direct the liquid into desired streams. For example, some beverages may be better infused by one or more relatively high velocity streams which agitate the beverage upon contact, whereas other beverages such as delicate tea leaves, herbs or flowers may be better infused by slower liquid jets or a gentle sprinkling of liquid. In the latter case the lid chamber could comprise a shallow dish to catch water as it comes in from the pump and an arrangement of holes to re-distribute the flow over the beverage in the infusion chamber below.

A further advantage is that the liquid receiving chamber in the lid may act as a supplemental container for at least some components of the beverage, such that the infusion chamber and lid in combination provide multiple infusion chambers. The lid chamber could hold in use aromatic components which impart an additional flavour or scent to the liquid before it moves into the main infusion chamber. The lid chamber can be used for beverage components which require only a short infusion time whereas the main infusion chamber can be used for beverage components which require a longer infusion time. The liquid pumped out of the heating chamber preferably passes through the lid chamber on a short timescale before being retained in the infusion chamber for a longer time.

Alternatively and/or additionally, the infusion chamber itself may comprise one or more internal liquid receiving chambers for containing in use at least some of the beverage components. Each additional infusion chamber is preferably perforated or apertured to allow liquid to drain down into the chamber below. The size of the perforations may be adapted for each chamber to a particular beverage component, e.g. depending on the optimal rate of flow to pick up the aroma or flavour from the beverage component before the liquid moves on. In this way the beverage can be infused with several layers of flavour and/or scent.

In other embodiments the lid itself may provide the main infusion chamber, either with or without any additional infusion chambers and/or liquid distribution means.

The circulation of liquid from the heating chamber to the infusion chamber and back into the heating chamber can advantageously increase contact between the heated water and beverage solids such that flavour is transferred into the beverage more quickly and efficiently. Moreover this is achieved without any manual intervention such as stirring being required. This has been found to improve the quality of the beverage. It is an improvement over immersion-type tea makers where the liquid is effectively stagnant and relies on diffusion of the beverage flavour between the two chambers.

A further advantage of the circulation provided between the heating chamber and the infusion chamber is that there is practically no requirement for a minimum volume of liquid to make a beverage. The appliance can make just one cup of tea at a time, because the pump ensures that all of the heated liquid comes into contact with the tea leaves and the retention of heated liquid in the infusion chamber ensures that the tea leaves become thoroughly wetted with the liquid that is available. In an immersion-type vessel, on the other hand, if the pot is only filled with a small amount of liquid relative to its design volume then the beverage will not be fully immersed and there is insufficient liquid available to wet all of the tea leaves.

Preferably the pump can be operated to transfer liquid from the heating chamber to the infusion chamber while beverage-infused liquid is draining into the heating chamber. Such re-circulation can advantageously increase contact between the beverage solids and infused beverage such that flavour is concentrated into the beverage.

As the infused beverage is transferred back into the liquid heating chamber which is provided with an electric heating means, the infused beverage therein can optionally be kept warm without needing to provide an additional keep warm heater plate or the like.

The beverage maker is preferably adapted to operate under atmospheric pressure so there is no requirement for the infusion chamber to be sealed into place. This can simplify fitting and removal of the infusion chamber.

As mentioned previously, in preferred embodiments the infusion chamber is arranged over the liquid heating chamber such that liquid can drain directly e.g. through one or more outlets into the chamber below by gravity. Thus in a preferred embodiment heated liquid is controllably pumped from the liquid heating chamber into the infusion chamber (at a first rate) and drained back into the heating chamber (at a second rate). Liquid is circulated and re-circulated between the two chambers for as long as the pump is running.

The pump may be activated by any suitable means. Manual activation may be used. However, in preferred embodiments, automatic control means is provided to activate the pump. The control means may be configured to activate the pump after a predetermined period of heating liquid in the heating chamber, but is preferably arranged to activate the pump upon sensing that liquid in the heating chamber has reached a predetermined temperature. Preferably the control comprises means enabling a user to set or select the predetermined temperature for pump activation, for example depending on the desired infusion temperature. The control means therefore preferably comprises a thermal sensor which is responsive, either directly or indirectly, to the temperature of the liquid being heated in the lower chamber. In the latter case the control may be responsive to the temperature of the heating means or the base, preferably by way of a bimetallic actuator mounted in thermal contact therewith. The control means may also comprise a steam sensitive actuator to detect boiling. Preferably the thermally sensitive control is a variable temperature control, such as the Applicant's U19 electromechanical control, or an electronic control.

As is mentioned above, in preferred embodiments a user can set the predetermined temperature depending on the type of beverage to be infused, for example a temperature of 100 ºC may be desirable for black tea while a temperature of 80 ºC may be desirable for green tea. By setting the appropriate temperature of the liquid for infusion, the flavour of the beverage can be enhanced.

The control means may be operatively connected to a switch for the pump. Although in some embodiments the electric heating means may be arranged to continue heating water in the heating chamber once the pump has started, it is preferred that the thermally sensitive control also operates to disconnect or interrupt the power supply to, or reduce heating output of, the heating means at or around the same time that the pump is activated.

The pump may be switched off manually once it is determined by a user that a desired infusion time has been achieved. In preferred embodiments a timing control associated with the pump terminates liquid transfer after a predetermined transfer/infusion time has passed. For instance, the predetermined period may be two minutes for black tea or four minutes for oolong tea. The transfer/infusion time may be set by a user when selecting the water infusion temperature. Of course, the beverage maker may be pre-programmed with a number of settings relating to different infusion temperatures and times for different types of beverage. Such programs may be stored in a memory, for example in an electronic control means comprising a microprocessor. It may also be possible to adjust the pumping rate to suit the making of different beverages.

In preferred embodiments, once the pump is deactivated, all the liquid left in the infusion chamber will drain back into the heating chamber without recirculation. A user may be alerted by a visible and/or audible indicator that the infused beverage is ready. In a set of preferred embodiments the final beverage can be poured out of the heating chamber, which is preferably provided with a handle and spout for this purpose.

The electric heating means may comprise a higher power heating means (e.g. 2 to 3 kW in Europe, 1.2 to 1.5 kW in Japan and the US) for heating water in the chamber to temperatures up to boiling and a lower power heating means (e.g. 50 to 200 W) to keep warm the beverage-infused liquid in the heating chamber during and after circulation by the pump. The thermally sensitive control means may switch the heating means from higher to lower power upon water in the chamber reaching a predetermined temperature and the pump being activated. Such a keep-warm heater may be controlled by a timer or manually deactivated.

The electric heating means may take any suitable form, for example it may comprise an immersed heater. However it is preferred that the heating means comprises an underfloor heater comprising a sheathed heating element or a thick film heating element mounted or attached to the underside of the base of the liquid heating chamber. Such underfloor heaters facilitate cleaning of the heating chamber and provide an attractive appearance. This may be particularly important where the liquid heating chamber is glass-walled so the heated base is on view. They are also cheaper and easier to manufacture than, say, tubular flow heaters which heat a liquid as it is pumped through a tube.

For ease of dispensing the beverage, the appliance preferably comprises an appliance part and a base part, with a preferably 360° cordless electrical connector provided in the appliance part which allows mains power to be supplied to the electric heating means when the appliance is placed on the base.

In accordance with all aspects of the invention, the infusion chamber is preferably removable from the appliance for ease of emptying, cleaning and re-filling. It is preferred that the infusion chamber is open-topped to facilitate the addition of beverage solids. The infusion chamber may sit in a top opening of the beverage maker, preferably in the top of the heating chamber (or other beverage receiving chamber), without requiring any attachment means. The beverage maker may have a lid, such as a lid as described above, arranged to close over both chambers. The lid may be closable whether or not the infusion chamber is present, allowing the beverage maker to also be used as a simple water heating appliance or storage jug if desired.

Although traditional tea pots provide a relatively large volume of liquid in which the tea leaves are free to move, it is not easy to remove the wet leaves after the beverage has been dispensed. The teapot often has to be scraped or sluiced out, but such cleaning operations are hampered by the curved walls of the tea pot and the presence of narrow channels formed by the spout and/or handle. The fact that traditional tea pots are usually made of ceramic or glass means that they can only be carefully tapped to help release the leaves e.g. into a sink or waste bin.

The infusion chamber according to embodiments of the present invention is preferably cylindrical in shape, typically formed from a metal or plastics mesh material. Its parallel sides without any protuberances such as a spout make it easier for spent tea leaves to be tapped out or scraped away. The chamber is easy to empty and clean, in particular due to its robust nature as compared to a ceramic tea pot. With a volume of only one to two cups, the size of the infusion chamber is still small enough that it will fit under a tap and can be easily rinsed out and replaced.

Some preferred embodiments of the present invention will now be described, by way of example only, with reference to the accompanying Figures, in which:
Figure 1 is a schematic cross-sectional view of a tea maker according to a preferred embodiment;
Figures 2a and 2b show detail of two alternative pump arrangements for use in the tea maker of Figure 1;
Figure 3 is a schematic circuit diagram showing the electrical connections to various parts of the tea maker according to a first embodiment;
Figure 4 is a schematic circuit diagram showing the electrical connections to various parts of the tea maker according to a second embodiment;
Figure 5 is a partial schematic cross-sectional view of the tea maker showing the top part according to another embodiment not being part of the invention;
Figure 6 is a schematic cross-sectional view of another embodiment of the tea maker with an alternative infusion chamber not being part of the invention;
Figure 7 shows an infusion chamber arrangement in accordance with a further embodiment not being part of the invention, and
Figure 8a is a left cross-sectional view of a tea maker according to another embodiment and Figure 8b is a right cross-sectional view of the tea maker according to this embodiment.

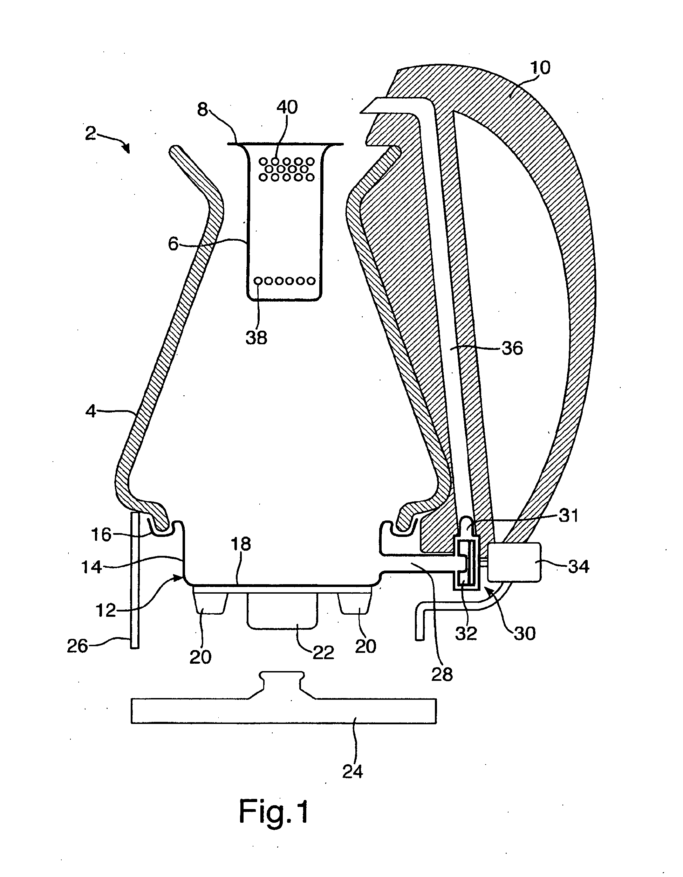

With reference to Figure 1, a tea making appliance 2 comprises a water heating chamber 4 and an infusion chamber 6 mounted in a top opening thereof. The water heating chamber 4 is preferably made from a transparent or translucent material, e.g. glass. The infusion chamber 6 is made from a metal and/or heat resistant plastics mesh. The infusion chamber 6 is provided with a lip 8 around its upper edge which allows it to be seated in the neck of the heating chamber 4.

The water heating chamber 4 is provided with a handle 10 to facilitate pouring a beverage therefrom. The body of the chamber 4 is also formed with a pouring lip or spout.

The water heating chamber 4 has a heated base 12 which is mounted so as to close an opening in the base of the liquid heating chamber 4. The heated base 12 is an underfloor heater comprising the Applicant's standard-form Sure Seal stainless steel base plate 14 which is circular and is provided with a peripheral channel 16 to allow it to be clamped to the lower edge of a chamber wall as is described in greater detail in WO 96/18331. Mounted on the underside of the base plate 14 is a heat diffusion member 18 and a sheathed electrical heating element 20, as is well known in the art.

A thermally sensitive control unit 22 is mounted to the underside of the heated base 12. The control unit is preferably the Applicant's commercially available U19 control, which is a variable temperature control system. The control unit 22 includes the upper part of a Strix P72 cordless electrical connector allowing 360º rotation. The other part of the P72 cordless connector is provided on the cordless power base 24 which has a mains power cord (not shown). Power is supplied to the control unit 22 and heating element 20 when the appliance 2 is placed on the power base 24. A moulded plastics skirt 26 is fitted beneath the chamber 4 and covers the electrical components under the heated base 12.

The heater plate 14 is formed with a pipe 28 for transferring liquid to a liquid pump 30 housed in a cavity 31 in the bottom of the handle moulding 10. The pump 30 comprises a rotating impeller 32 mounted on a shaft driven by a synchronous electric motor 34. The motor 34 is electrically connected to the control unit 22 and may be of the permanent magnet type. Attached to the outlet of the pump cavity 31 is a transfer pipe 36 which rises from the bottom to the top of the chamber 4 inside the handle moulding 10. The upper end of the transfer pipe 36 is arranged to exhaust liquid into the infusion chamber 6 and over a beverage e.g. tea leaves contained therein, as is described in more detail below.

Because the pump 30 and transfer pipe 36 are arranged externally from the water heating chamber 4, they do not interfere with emptying, re-filling and cleaning of the chamber 4. Moreover the transfer pipe 36 is conveniently accommodated in a cavity of the moulded handle 10 and is thereby hidden from view. The plastics handle 10 may also provide insulation for the pipe 36.

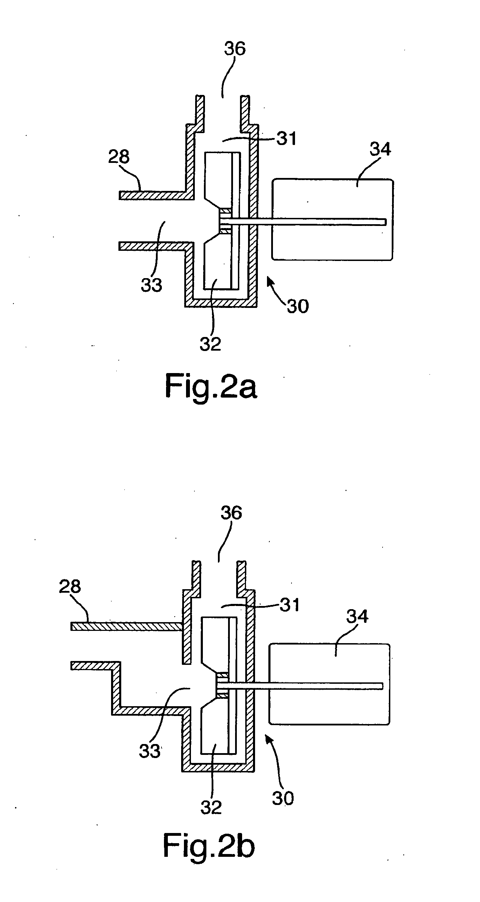

Figures 2a and 2b show a close-up of the connection between the inlet pipe 28 and the pump cavity 31. In Figure 2a the pipe 28 connects directly with an aperture 33 of the same size in a wall of the cavity 31 in front of the impeller 32. For a typical pump rate of 300 to 450 l/hr, the inlet pipe 28 may have an inner diameter of 8-10 mm. A problem with this arrangement is that air bubbles entrained in the heated water from the chamber 4 may coalesce into a large air bubble which becomes trapped in the pipe 28/aperture 33 and creates an airlock preventing water from reaching the impeller 32. It is therefore preferred that the connection between the inlet pipe 28 and the pump cavity 31 is baffled so as to prevent an air lock from forming.

An example of a baffling arrangement is shown in Figure 2b. It will be seen that in this embodiment the diameter of the pipe 28 is increased in the vicinity of its connection to the front wall of the pump cavity 31, such that not all of the water in the pipe 28 can pass straight through the aperture 33 into the cavity 31. Where the main portion of the inlet pipe 28 has an inner diameter of 8-10 mm, the end portion connecting to the aperture 33 (also having a diameter of 8-10 mm) has an increased inner diameter of 15-20 mm. Any entrained air bubbles become trapped in the widened portion of the pipe 28 outside the cavity wall rather than blocking the entrance 33 to the cavity 31. As the aperture 33 is formed in a thin wall, there is insufficient surface tension for an air bubble to stick there; it will either move back into the inlet pipe 28 and stick against the baffled wall, out of the way of the flow, or it will be released into the pump cavity 33 and forced up the transfer pipe 36.

The fact that the entry hole 33 to the pump cavity 31 has a reduced diameter compared to the widened portion of the pipe 28 means that a Venturi effect is created wherein water is speeded up as it passes into the cavity 31. If any bubbles escape from the pipe 28 then they are rushed through the entry hole 33 and entrained in the flow being pumped up the transfer pipe 36 rather than sticking in the pump cavity 31.

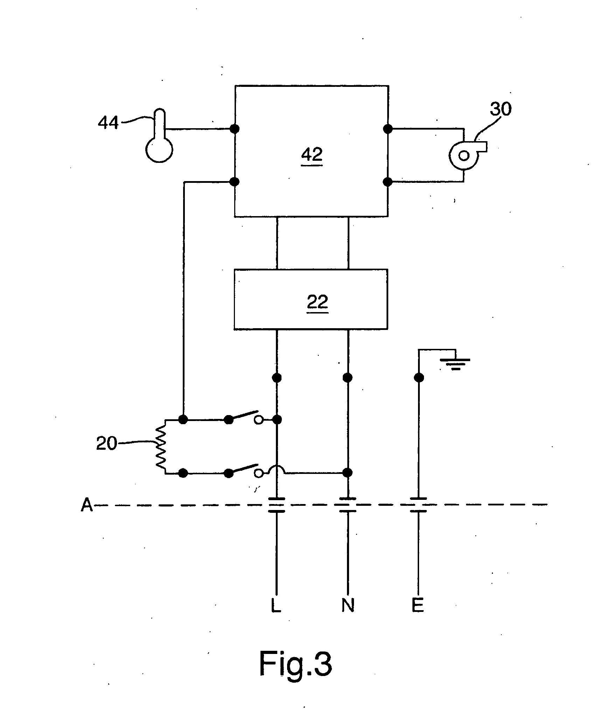

Turning now to Figure 3, there may be seen a block diagram showing the basic electrical connections between the various electrical parts. The diagram is split into two halves separated by a dashed line A. The parts below the line A are provided in the power base 24 whilst those above the line A are in the appliance 2. The Strix P72 cordless connector described above provides connection of the line L, neutral N and earth E lines from the mains power cord to the appliance 2. The earth line E is shown to pass straight through to the appliance 2 for connection to the heater plate 14 and any other metal parts. The control unit 22 provides power from the cordless connector to both the heating element 20 and the pump 30. The control unit 22 is connected to the pump 30 via a timer control 42. Also connected to the timer control 42 is a temperature sensor 44 (not shown in Figure 1) which is mounted to a side of the heater plate 14.

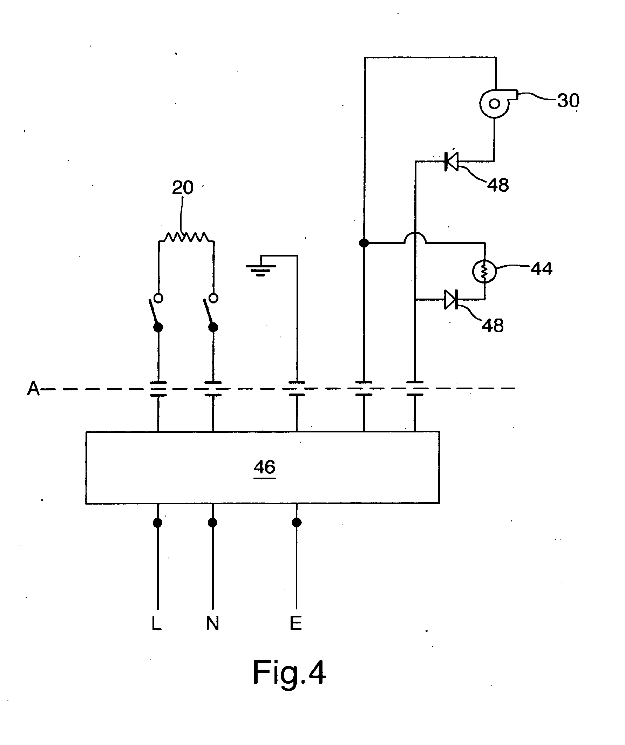

Figure 4 shows an alternative arrangement for the electrical connections. In this embodiment the control unit 22 is not a Strix U19 but instead connects to an electronic control 46 which is provided in the base part 24. The electronic control 46 is connected to the appliance by a Strix P76, five pole cordless connector. Three poles of the connector provide for connection of the line L, neutral N and earth E lines from the mains power cord to the appliance 2. The other two terminals of the cordless connector are used to connect the pump 30 and temperature sensor 44 to the electronic control 46. The electronic control 46 in the base 24 may comprise a user interface (not shown) including control buttons and/or a display. Such a control arrangement is described in more detail in Applicant's WO 01/28294. The temperature sensor 44 is a thermistor. Diodes 48 are provided in the power supply lines for the thermistor 44 and pump 30.

Turning back to Figure 1, the infusion chamber 6 is shown as a generally cylindrical, cup-like chamber but it may of course take any suitable form. The chamber 6 is provided with two sets of pores 38, 40 to allow liquid to drain therefrom whilst retaining a beverage such as tea leaves or coffee grounds. In the preferred embodiment the chamber 6 is formed from a stainless steel mesh having 0.75 mm pores 38, 40 arranged with their centres on a 1.25 mm size grid. A first set of pores 38 at a lower end of the infusion chamber 6 comprises only about 40 pores so as to limit how quickly liquid can drain out of the chamber 6. The number of pores 38 is chosen so that the rate of flow of liquid out of the chamber 6 is less than the rate at which liquid in pumped into the chamber 6. This means that the infusion chamber 6 will fill up with liquid rather than draining straightaway. To prevent the chamber 6 from overflowing, a second set of pores 40 at the upper end of the chamber 6 comprises about 400 pores. The number of pores 40 is chosen so as not to limit the flow of liquid out of the chamber when it becomes full.

The outlet end of the transfer pipe 36 is positioned and angled so as to set up a swirling flow of heated liquid into the infusion chamber 6. For example, the outlet can be arranged so that water is pumped out in a jet along a trajectory which is tangential to the wall of the infusion chamber at the point of contact. The tangentially entering fluid and cylindrical upper wall portion set up a bulk circulation of liquid around the periphery of the chamber 6. The jet of liquid entering the infusion chamber 6 may also be angled down slightly so that the flow is in a shallow downward spiral which picks up the beverage solids e.g. tea leaves in the chamber 6 and causes them to circulate in the liquid. The cyclone effect is aided by the fact that a volume of liquid is retained in the infusion chamber 6. The result is a swirling pool of liquid into which the beverage can infuse much more readily than e.g. a stagnant liquid volume.

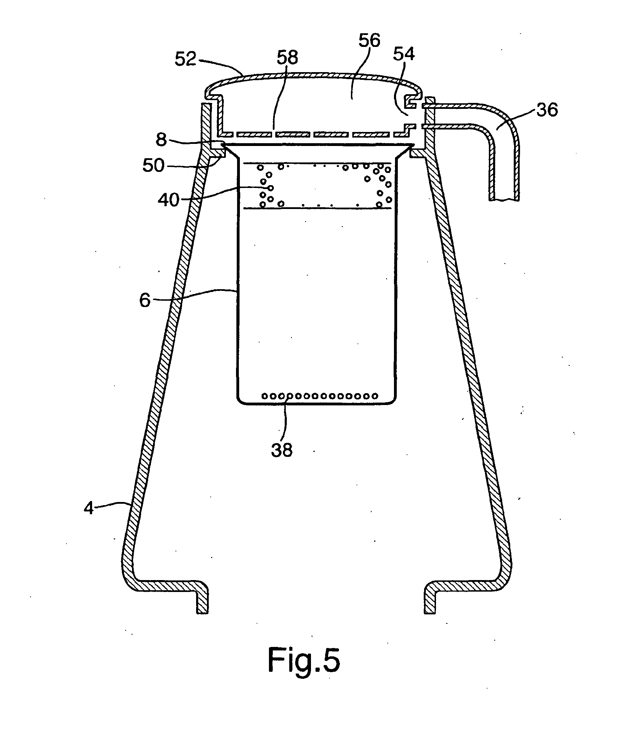

Transfer of liquid from the transfer pipe 36 into the infusion chamber 6 according to another embodiment will be described with reference to Figure 5. From this Figure it can be seen that the lip 8 at the top of the infusion chamber 6 rests on a rim 50 around the inside of the top opening of the heating chamber 4. A lid 52 is fitted over the top of the infusion chamber 6 and heating chamber 4. The lid 52 includes an aperture 54 in its side wall which can be aligned opposite the end of the transfer pipe 36. Liquid pumped up the pipe 36 will therefore pass through the aperture 54 into the lid chamber 56. In this embodiment the lid chamber 56 is closed, but the lid 52 could easily be provided with an opening to allow a user to place additional beverage components inside the lid chamber 56 if desired.

The base 58 of the lid 52 forming the floor of the lid chamber 56 is apertured or perforated. The base 58 may be integrally moulded or provided with a mesh. The purpose of the perforated base 58 is to convert the stream of liquid entering the lid chamber 56 from the transfer pipe 36 into a shower of liquid for the infusion chamber 6 below. This can be particularly desirable when infusing more delicate tea leaves or herbal materials.

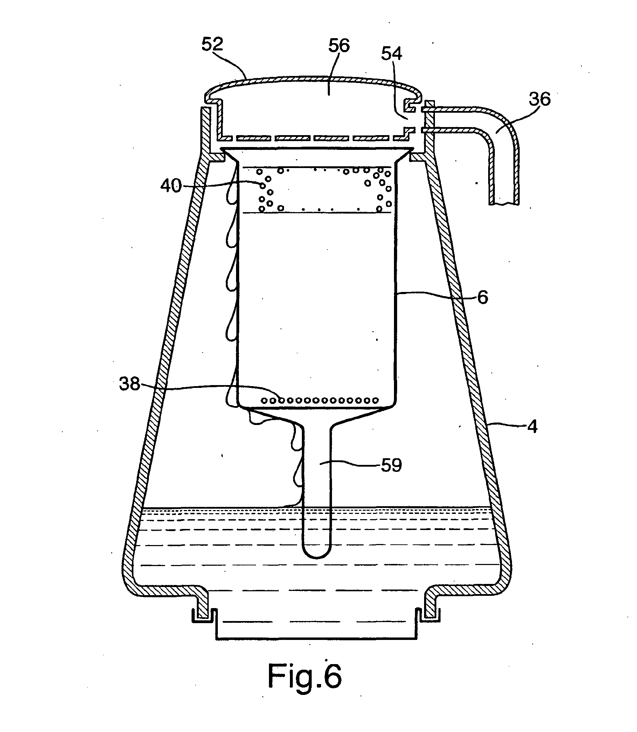

There is shown in Figure 6 an alternative wherein the infusion chamber 6 is provided with means for directing the flow of liquid out of the infusion chamber 6 and into the heating chamber 4 below. In this embodiment the base of the infusion chamber 6 is provided with a protuberance 59 extending down into the heating chamber 4. As liquid is released through the perforations 38, 40 in the walls of the infusion chamber 6, it runs down the sides of the chamber 6 and onto the surface of the protuberance 59. Surface tension effects ensure that the trickles of liquid are combined into a single laminar flow down the surface of the protuberance 59 and into the chamber 4 below. Rather than separate droplets or dribbles of beverage falling into the heating chamber 4 and foaming the surface of the heated liquid, a steady flow of liquid is achieved with minimal turbulence.

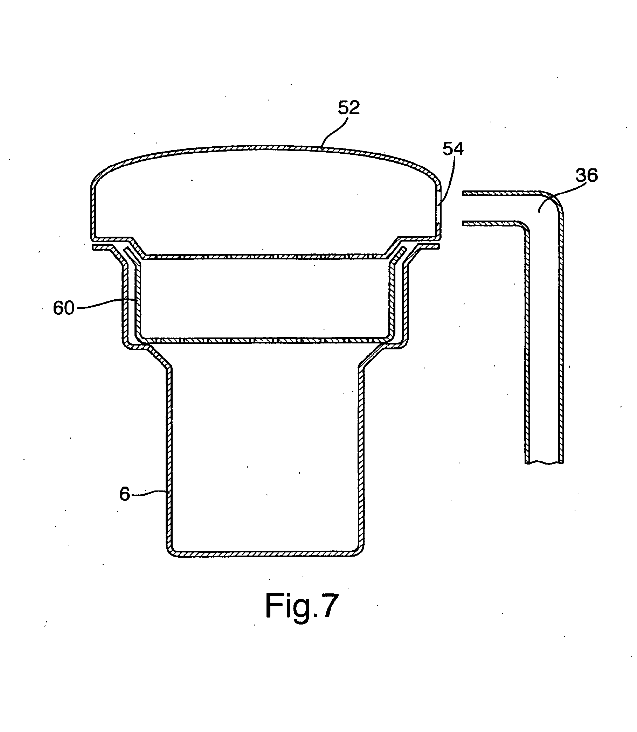

Figure 7 shows another embodiment wherein an additional infusion chamber 60 is mounted in the main infusion chamber 6 below the lid 52. The additional infusion chamber 6 can be used to hold beverage components which require less time to infuse their flavour or aroma into the beverage, for example to add floral notes to a tea. The additional infusion chamber 6 can be used as desired. Of course, the appliance could easily be adapted to receive more than one additional infusion chamber. The lid 52 can also be omitted, especially if is it not required to convert the liquid stream into a shower.

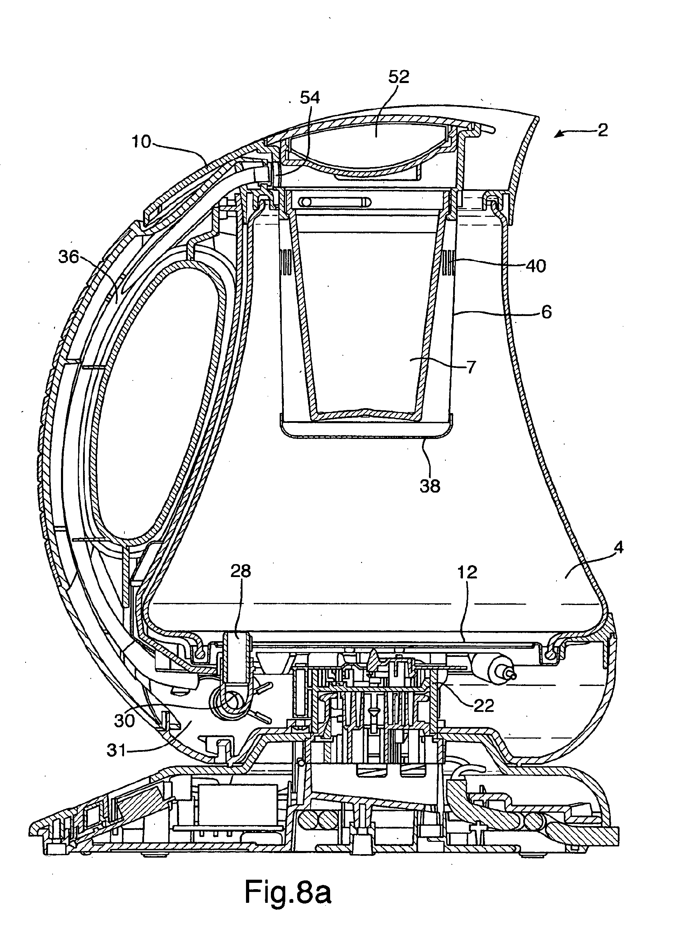

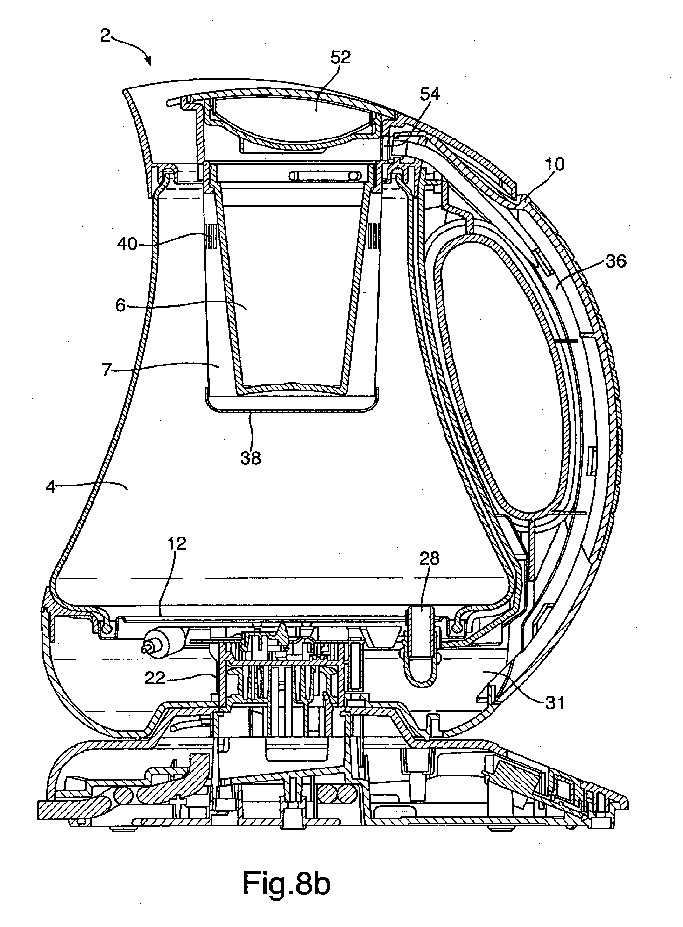

There is shown in Figure 8 another embodiment of a tea maker which has a similar construction to the embodiment of Figure 1. Where the same general features are common to both embodiments they will not be described again.

In this embodiment the water heating chamber 4 is closed by a heater plate 12 with the pump cavity 31 located beneath the heater plate 12 rather than to the side. An inlet pipe 28 passes through the heated base 12 to supply water from the heating chamber 4 to the pump cavity 31. In this embodiment the pump cavity 31 occupies a space below the heater 12 and thus may be made larger without unduly affecting the overall diameter of the appliance 2. The pump cavity 31 could be annular and surround at least part of the control and cordless connector 22.

The pump 30 is provided in the pump cavity 31 below the inlet pipe 28. In this embodiment there is no baffle arrangement at the pump inlet. A transfer pipe 26 is arranged with its inlet in the pump cavity 31 so that heated water is pumped up the transfer pipe 26 into the infusion chamber 6. The transfer pipe 36 is embedded in the handle 10 of the appliance 2. The transfer pipe 36 is insulated by the plastic handle 10, which helps to keep the water warm as it is pumped as well as protecting the user from burns. The transfer pipe 36 could run externally of the handle instead, for example up a side of the vessel 2, but then it may need to be insulated.

It can be seen in Figure 8 that the infusion chamber 6 is generally cylindrical and comprises an inner beverage container 7. The beverage container 7 is a sieve-like container with a truncated conical form. The beverage container 7 is perforated such that there is no restriction to the flow of liquid in and out, but a beverage such as tea leaves is contained. The beverage container 7 is removably positioned in the infusion chamber 6 so that it can be emptied and replaced without removing the outer infusion chamber 6.

The infusion chamber 6 is provided with two sets of liquid outlets 38, 40 which determine the rate of flow of infused beverage back into the heating chamber 4. The outlets 38 at the bottom of the infusion chamber 6 are sized so as to restrict the drainage rate out of the infusion chamber 6. Heated liquid is pumped into the infusion chamber 6 at a faster rate than it can drain out through the outlets 38. This means that liquid is collected in the infusion chamber 6 and infuses with the tea leaves in the strainer cup 7 for a time before draining back into the heating chamber 4. Another set of larger outlets 40 towards the top of the infusion chamber 6 provide an overflow release, for example if there is a blockage and liquid is not draining enough. The outlets 40 provide for unrestricted drainage.

The infusion chamber 6 is provided with a lid 52 which has an inlet 54 for the transfer pipe 36. The inlet 54 is positioned so as to direct water out of the transfer pipe 36 and onto an inside surface of the lid 52 which is shaped so as to direct the flow down into the infusion chamber 6 at a tangent to its walls, thereby setting up a circulatory flow. Circulation of liquid in the chamber 6 can help to stir up the tea leaves in the basket 7.

Operation of the tea maker will now be described. Firstly, the heating chamber 4 is filled with water (water level markings may be provided on a wall of the chamber) and the infusion chamber(s) 6, 60 is/are filled with tea leaves or other beverage material. The infusion chamber(s) 6, 60 may be removed to be filled and then placed back into the neck of the heating chamber 4. The lid 52 is placed over the top of the appliance 2, covering the infusion chamber(s) 6, 60 and closing off the heating chamber 4. This helps to ensure that the steam generated in the heating chamber 4 is contained and takes part in the infusion process.

With the appliance 2 placed on the power base 24, it is switched on and the control unit 22 supplies power to the heating element 20. A user may set the desired temperature for infusion, e.g. depending on the type of beverage. This may be done using a temperature control knob (e.g. with a U19 control unit) or by the buttons on a user interface (e.g. with an electronic control). Several preset temperature modes may be available and/or the user may be able to freely set or programme the desired temperature.

Water in the lower chamber 4 will begin to heat and its temperature is monitored by the control 22. Once the control 22 senses that the water has reached the predetermined infusion temperature, it will operate to switch off or reduce the power supplied to the heating element 20 and to switch on the pump 30 under the control of the timer. The control 22 may delay for 8-10 seconds before turning on the pump 30, to allow any residual boiling to subside and avoid steam being sucked into the transfer pipe 36. When the pump 30 is first activated, it may be pulsed on and off for a few cycles (e.g. ON for 1-1.5 s, OFF for 0.5 s) so as to help to purge any air bubbles from the inlet pipe 28 leading to the pump 30.

The pump 30 then begins to continuously transfer heated water from the lower chamber 4 into the infusion chamber 6 through the transfer pipe 36. As is described above and as defined in the claims, it is advantageous for the jet of liquid entering the infusion chamber 6 to set up a swirling flow. In the embodiments of Figs. 5 and 6, liquid first enters the lid chamber 56 through the side aperture 54 and is sprayed out of the base 58 of the lid over the beverage material contained in the infusion chamber(s) 6, 60 below.

Due to the restricted number of lower pores 38, liquid is not able to drain straight out of the infusion chamber 6 but is held there for a time to infuse with the tea leaves. As the water level in the infusion chamber 6 rises, infused beverage starts to drain out of the lower pores 38 into the chamber 4 below. Depending on the amount of beverage being prepared, some heated water which has not yet been transferred by the pump 30 may remain in the heating chamber 4. The infused beverage will mix with the heated water left in the lower chamber 4 before being re-circulated by the pump 30. If the infusion chamber 6 becomes too full then some liquid will be let out through the upper set of pores 40, thereby ensuring that the chamber 6 does not overflow.

Circulation of liquid between the heating chamber 4 and the infusion chamber(s) 6, 60 continues until the timer switches off the pump 30, for instance after 3-5 minutes. The liquid left in the infusion chamber(s) 6, 60 then drains back down into the lower chamber 4 from where the final beverage may be dispensed. The infusion chamber 6 can be fitted sufficiently tightly in the top of the chamber 4 that it stays in place when the chamber 4 is lifted and tilted to pour out the beverage from a spout (not shown). Alternatively the infusion chamber(s) 6, 60 and lid 52 may be removed before the beverage is dispensed.

The heating element 20 may stay energised, albeit at a lower power, during circulation and even afterwards, to keep the beverage warm until it is ready to be served. Alternatively, a separate keep warm heating element may be provided.

Although the embodiments described above relate to a porous mesh infusion chamber, it will be appreciated that the invention is not limited to this. The outlet means from the infusion chamber may comprise any suitable liquid outlet which can act to limit the drainage of liquid out of the infusion chamber. For example, an outlet valve arrangement may be provided.

## Claims

1. An electric infusion beverage maker comprising a liquid heating chamber (4) having electric heating means (20) associated therewith for heating liquid in the chamber (4) and an infusion chamber (6) for receiving in use a beverage to be infused, wherein the liquid heating chamber (4) is arranged to receive beverage-infused liquid from the infusion chamber (6);
**characterised by** further comprising a pump (30) for transferring heated liquid from the liquid heating chamber (4) to the infusion chamber (6) at a transfer rate, wherein the infusion chamber (6) has outlet means (38) arranged such that beverage-infused liquid drains out of the infusion chamber (6) and into the liquid heating chamber (4) at a drainage rate which is lower than the transfer rate, and wherein the transfer of liquid into the infusion chamber (6) is arranged to set up a cyclonic or swirling flow in the infusion chamber (6).

2. A beverage maker as claimed in claim 1, wherein the pump (30) is operable to transfer liquid from the heating chamber (4) to the infusion chamber (6) while beverage-infused liquid drains into the heating chamber (4).

3. A beverage maker as claimed in claim 1 or 2, wherein the outlet means (38) is arranged such that infused beverage simultaneously drains out of the infusion chamber (6) at the drainage rate whenever heated liquid is being transferred into the infusion chamber (6) at the transfer rate.

4. A beverage maker as claimed in any preceding claim, wherein the pump (30) is arranged to have a period of pulsed operation before beginning continuous operation.

5. A beverage maker as claimed in any preceding claim, wherein the pump (30) is disposed in a pump cavity (31) connected to said liquid heating chamber (4) by an inlet pipe (28).

6. A beverage maker as claimed in claim 5, wherein the pump (30) is disposed in a pump cavity (31) provided beneath the electric heating means (20) of the heating chamber (4).

7. A beverage maker as claimed in any preceding claim, further comprising a pipe (36) external to the heating chamber (4) to transfer liquid from the pump (30) to the infusion chamber (6).

8. A beverage maker as claimed in any preceding claim, further comprising automatic control means to activate the pump (30).

9. A beverage maker as claimed in claim 8, wherein the control means is configured to activate the pump (30) upon sensing that liquid in the heating chamber (4) has reached a predetermined temperature and wherein the control means comprises means for a user to set or select said predetermined temperature depending on the desired infusion temperature.

10. A beverage maker as claimed in claim 8 or 9, comprising a thermally sensitive control (22) operable to disconnect or interrupt the power supply to, or reduce heating output of, the heating means (20) at the same time that the pump (30) is activated.

11. A beverage maker as claimed in any of claims 8, 9 or 10, comprising a timing control associated with the pump (30) which terminates liquid transfer after a predetermined period of time has passed.

12. A beverage maker as claimed in any preceding claim, wherein the infusion chamber (6) has a perforated or mesh interface (38, 40) with the liquid heating chamber (4) which allows infused beverage to drain into the liquid heating chamber (4).

13. A beverage maker as claimed in claim 12, wherein the number and/or size of pores in said interface (38) is chosen so as to limit the rate of flow of liquid out of the infusion chamber (6) beyond the limitation in flow rate imposed by the beverage solids.

14. A beverage maker as claimed in claim 12 or 13, wherein the infusion chamber (6) is provided with a larger number and/or size of pores (40) at an upper portion thereof to provide for overflow of liquid into the heating chamber (4).

## Patentansprüche

1. Elektrische Aufgussgetränkezubereitungsmaschine, umfassend eine Flüssigkeitsheizkammer (4), die ein elektrisches Heizmittel (20), das ihr zum Erhitzen von Flüssigkeit in der Kammer (4) zugeordnet ist, und eine Aufgusskammer (6) zum im Betrieb Aufnehmen eines Getränks, das aufgegossen werden soll, aufweist, wobei die Flüssigkeitsheizkammer (4) dafür eingerichtet ist, zum Getränk aufgegossene Flüssigkeit von der Aufgusskammer (6) aufzunehmen;
**dadurch gekennzeichnet, dass** sie ferner eine Pumpe (30) zum Übermitteln erhitzter Flüssigkeit mit einer Übermittlungsrate von der Flüssigkeitsheizkammer (4) zur Aufgusskammer (6) umfasst, wobei die Aufgusskammer (6) ein Auslassmittel (38) aufweist, das so eingerichtet ist, dass zum Getränk aufgegossene Flüssigkeit aus der Aufgusskammer (6) herausläuft und in die Flüssigkeitsheizkammer (4) mit einer Flussrate hineinläuft, die niedriger als die Übermittlungsrate ist, und wobei die Übermittlung von Flüssigkeit in die Aufgusskammer (6) dafür eingerichtet ist, einen zyklonischen oder wirbelnden Fluss in der Aufgusskammer (6) zu erzeugen.

2. Getränkezubereitungsmaschine gemäß Anspruch 1, bei der die Pumpe (30) betreibbar ist, um Flüssigkeit von der Heizkammer (4) zur Aufgusskammer (6) zu übermitteln, während zum Getränk aufgegossene Flüssigkeit in die Heizkammer (4) hineinläuft.

3. Getränkezubereitungsmaschine gemäß Anspruch 1 oder 2, bei der das Auslassmittel (38) so eingerichtet ist, dass das aufgegossene Getränk gleichzeitig aus der Aufgusskammer (6) mit der Auslaufrate herausläuft, wann immer erhitzte Flüssigkeit in die Aufgusskammer (6) mit der Übermittlungsrate übermittelt wird.

4. Getränkezubereitungsmaschine gemäß einem der vorhergehenden Ansprüche, bei der die Pumpe (30) dafür eingerichtet ist, einen Zeitraum von gepulstem Betrieb aufzuweisen, bevor sie einen kontinuierlichen Betrieb aufnimmt.

5. Getränkezubereitungsmaschine gemäß einem der vorhergehenden Ansprüche, bei der die Pumpe (30) in einem Pumpenhohlraum (31) angeordnet ist, der mit der Flüssigkeitsheizkammer (4) durch ein Einlassrohr (28) verbunden ist.

6. Getränkezubereitungsmaschine gemäß Anspruch 5, bei der die Pumpe (30) in einem Pumpenhohlraum (31) angeordnet ist, der unterhalb der elektrischen Heizmittel (20) der Heizkammer (4) bereitgestellt ist.

7. Getränkezubereitungsmaschine gemäß einem der vorhergehenden Ansprüche, ferner umfassend ein Rohr (36) außerhalb der Heizkammer (4), um Flüssigkeit von der Pumpe (30) zur Aufgusskammer (6) zu übermitteln.

8. Getränkezubereitungsmaschine gemäß einem der vorhergehenden Ansprüche, ferner umfassend ein automatisches Steuermittel, um die Pumpe (30) zu aktivieren.

9. Getränkezubereitungsmaschine gemäß Anspruch 8, bei der das Steuermittel konfiguriert ist, die Pumpe (30) bei der Feststellung, dass Flüssigkeit in der Heizkammer (4) eine vorbestimmte Temperatur erreicht hat, zu aktivieren, und wobei das Steuermittel ein Mittel für einen Benutzer umfasst, um die vorbestimmte Temperatur in Abhängigkeit von der gewünschten Aufgusstemperatur zu setzen oder auszuwählen.

10. Getränkezubereitungsmaschine gemäß Anspruch 8 oder 9, umfassend eine thermisch empfindliche Steuerung (22), die betreibbar ist, um zur selben Zeit, zu der die Pumpe (30) aktiviert wird, die Energiezufuhr zu dem Heizmittel (20) zu trennen oder zu unterbrechen, oder die Heizausgabe des Heizmittels (30) zu verringern.

11. Getränkezubereitungsmaschine gemäß Anspruch 8, 9 oder 10, umfassend eine der Pumpe (30) zugeordnete Zeitsteuerung, die die Flüssigkeitsübermittlung beendet, nachdem ein vorbestimmter Zeitraum verstrichen ist.

12. Getränkezubereitungsmaschine gemäß einem der vorhergehenden Ansprüche, bei der die Aufgusskammer (6) eine perforierte oder gitterartige Grenzfläche (38, 40) mit der Flüssigkeitsheizkammer (4) aufweist, die es aufgegossenem Getränk ermöglicht, in die Flüssigkeitsheizkammer (4) hineinzulaufen.

13. Getränkezubereitungsmaschine gemäß Anspruch 12, bei der die Anzahl und/oder Größe von Poren in der Grenzfläche (38) so gewählt ist, die Flussrate heraus aus der Aufgusskammer (6) über die Begrenzung der Flussrate, die durch die Getränkefeststoffe auferlegt wird, hinaus zu begrenzen.

14. Getränkezubereitungsmaschine gemäß Anspruch 12 oder 13, bei der die Aufgusskammer (6) an einem oberen Abschnitt davon mit einer größeren Anzahl und/oder Größe von Poren (40) versehen ist, um für ein Überlaufen von Flüssigkeit in die Heizkammer (4) hinein zu sorgen.

## Revendications

1. Dispositif électrique de fabrication de boisson par infusion comprenant une chambre de chauffage de liquide (4) ayant un moyen de chauffage électrique (20) associé à celle-ci pour chauffer un liquide dans la chambre (4) et une chambre d'infusion (6) pour recevoir lors de l'utilisation une boisson à infuser, dans lequel la chambre de chauffage de liquide (4) est agencée pour recevoir un liquide de boisson infusée provenant de la chambre d'infusion (6) ;
**caractérisé en ce qu'**il comprend en outre une pompe (30) pour transférer un liquide chauffé provenant de la chambre de chauffage de liquide (4) vers la chambre d'infusion (6) à un certain débit de transfert, dans lequel la chambre d'infusion (6) a un moyen de sortie (38) agencé de sorte que le liquide de boisson infusée s'écoule hors de la chambre d'infusion (6) et dans la chambre de chauffage de liquide (4) à un débit de drainage qui est inférieur au débit de transfert, et dans lequel le transfert de liquide dans la chambre d'infusion (6) est agencé pour établir un écoulement cyclonique ou tourbillonnant dans la chambre d'infusion (6).

2. Dispositif de fabrication de boisson selon la revendication 1, dans lequel la pompe (30) peut être mise en oeuvre pour transférer un liquide de la chambre de chauffage (4) à la chambre d'infusion (6) tandis qu'un liquide de boisson infusée s'écoule dans la chambre de chauffage (4).

3. Dispositif de fabrication de boisson selon la revendication 1 ou 2, dans lequel le moyen de sortie (38) est agencé de sorte qu'une boisson infusée s'écoule simultanément hors de la chambre d'infusion (6) au débit de drainage chaque fois qu'un liquide chauffé est transféré dans la chambre d'infusion (6) au débit de transfert.

4. Dispositif de fabrication de boisson selon l'une quelconque des revendications précédentes, dans lequel la pompe (30) est agencée pour avoir une période de fonctionnement pulsé avant de commencer un fonctionnement continu.

5. Dispositif de fabrication de boisson selon l'une quelconque des revendications précédentes, dans lequel la pompe (30) est disposée dans une cavité de pompe (31) reliée à ladite chambre de chauffage de liquide (4) par un tuyau d'entrée (28).

6. Dispositif de fabrication de boisson selon la revendication 5, dans lequel la pompe (30) est disposée dans une cavité de pompe (31) prévue au-dessous du moyen de chauffage électrique (20) de la chambre de chauffage (4).

7. Dispositif de fabrication de boisson selon l'une quelconque des revendications précédentes, comprenant en outre un tuyau (36) externe à la chambre de chauffage (4) pour transférer un liquide de la pompe (30) à la chambre d'infusion (6).

8. Dispositif de fabrication de boisson selon l'une quelconque des revendications précédentes, comprenant en outre un moyen de commande automatique pour activer la pompe (30).

9. Dispositif de fabrication de boisson selon la revendication 8, dans lequel le moyen de commande est configuré pour activer la pompe (30) lors de la détection qu'un liquide dans la chambre de chauffage (4) a atteint une température prédéterminée et dans lequel le moyen de commande comprend un moyen pour qu'un utilisateur fixe ou sélectionne ladite température prédéterminée en fonction de la température d'infusion souhaitée.

10. Dispositif de fabrication de boisson selon la revendication 8 ou 9, comprenant une commande thermiquement sensible (22) pouvant être mise en oeuvre pour débrancher ou interrompre l'alimentation en énergie vers le, ou réduire la sortie de chauffage du, moyen de chauffage (20) en même temps que la pompe (30) est activée.

11. Dispositif de fabrication de boisson selon l'une quelconque des revendications 8, 9 ou 10, comprenant une commande de synchronisation associée à la pompe (30) qui termine un transfert de liquide après l'écoulement d'une période de temps prédéterminée.

12. Dispositif de fabrication de boisson selon l'une quelconque des revendications précédentes, dans lequel la chambre d'infusion (6) a une interface perforée ou maillée (38, 40) avec la chambre de chauffage de liquide (4) qui permet à une boisson infusée de s'écouler dans la chambre de chauffage de liquide (4).

13. Dispositif de fabrication de boisson selon la revendication 12, dans lequel le nombre et/ou la taille de pores dans ladite interface (38) sont choisis de façon à limiter le débit moyen de liquide hors de la chambre d'infusion (6) au-delà de la limitation de débit imposée par les solides de boisson.

14. Dispositif de fabrication de boisson selon la revendication 12 ou, 13, dans lequel la chambre d'infusion (6) est munie d'un plus grand nombre et/ou d'une plus grande taille de pores (40) au niveau d'une partie supérieure de celle-ci pour permettre le débordement de liquide dans la chambre de chauffage (4).
